# EUROPEAN PATENT APPLICATION

(11) **EP 3 251 896 A1**
(43) Date of publication of application: **06.12.2017**
(21) Application number: 16743041.2
(22) Date of filing: 07.01.2016
(51) Int. Cl.: B60Q 1/38

(54) **DIRECTION INDICATION DEVICE FOR VEHICLE**

(30) Priority: 26.01.2015 JP 2015012413
(71) Applicant: Kabushiki Kaisha Tokai Rika Denki Seisakusho, Ohguchi-cho Niwa-gun Aichi 480-0195 (JP)
(72) Inventor: MEGA, Susumu, Aichi 480-0195 (JP)
(74) Representative: TBK
(86) International application number: PCT/JP2016/050343
(87) International publication number: WO 2016/121437

(57) **Abstract**

An ECU (12) controls light emission drivers (18R and 18L) so as to respectively cause a direction indication lamp (24R or 24L) corresponding to a turning direction and an infrared LED (22R or 22L) at the opposite side from the turning direction illuminate. Specifically, the ECU (12) controls the light emission drivers (18R and 18L) so as to flash the direction indication lamp (24R or 24L) toward the turning direction and cause the infrared LED (22R or 22L) at the opposite side from the turning direction illuminate.

## Description

### TECHNICAL FIELD

The present invention relates to a direction indication device for a vehicle that notifies a turning direction of the vehicle to another vehicle.

### BACKGROUND ART

Japanese Patent Application Laid-Open (JP-A) No. H10-129343 proposes equipping a light emission component that flashes with a pulse width and pulse interval that are not visible to the eye together with a flashing signal that is produced by a flasher unit. Another vehicle is equipped with a light detection component and a detection circuit, identifies specific signals, and activates a warning device. Thus, with the technology of JP-A No. H10-129343, a notification may be given to another vehicle by a means other than visual sight of a direction indication lamp flashing.

### SUMMARY OF INVENTION

### TECHNICAL PROBLEM

However, in the technology of JP-A No. H10-129343, depending on a positional relationship between cars, light emitted from a light emission component may not be detected by the light detection component and a turning direction may not be notified. For example, when a vehicle is turning right at an intersection, illumination of a direction indicator may not be visible to a vehicle approaching from the left side, which is the opposite side from the turning direction, and the aforementioned specific signals may not be detected. As a result, the turning direction may not be notified.

The present invention has been made in consideration of the circumstances described above and an object of the present invention is to improve turning direction notifying performance to other vehicles.

### SOLUTION TO PROBLEM

In order to achieve the object described above, a direction indication device for a vehicle according to a first aspect of the present invention includes: a pair of direction indicators disposed at left and right of the vehicle, each direction indicator including a visible light emission unit that emits visible light and a non-visible light emission unit that emits non-visible light; an operation unit that is operated to command a turning direction; and a control unit that controls the direction indicators so as to respectively cause the visible light emission unit corresponding to the turning direction commanded by the operation unit and the non-visible light emission unit at the opposite side from the turning direction illuminate.

According to the first aspect of the present invention, the visible light emission units and non-visible light emission units of the pair of direction indicators are provided at the left and right of the vehicle. Thus, both visible light and non-visible light may be emitted.

An operation for commanding a turning direction is performed at the operation unit. That is, illuminations of the pair of direction indicators are commanded by operations of the operation unit.

The control unit controls the direction indicators so as to respectively cause the visible light emission unit corresponding to the turning direction commanded by the operation unit and the non-visible light emission unit at the opposite side from the turning direction illuminate. Thus, non-visible light is emitted toward a vehicle that is approaching from the opposite side from the turning direction. Hence, the non-visible light may be detected by an imaging unit such as a camera or the like and the turning intention may be notified. Thus, turning direction notifying performance to other vehicles may be improved compared to the related art.

The control unit may further control the direction indicators, when the operation unit is successively operated plural times, so as to respectively cause the visible light emission unit corresponding to the turning direction commanded by the operation unit and the non-visible light emission unit corresponding to the turning direction illuminate (a second aspect). Thus, light may be emitted with illumination modes of the non-visible light emission units and the visible light emission units that are different modes. Therefore, for example, a lane change to switch across multiple traffic lanes or the like may be notified.

A direction indication device for a vehicle according to a third aspect of the present invention includes: a pair of direction indicators disposed at left and right of the vehicle, each direction indicator including a visible light emission unit that emits visible light and a non-visible light emission unit that emits non-visible light; an operation unit that is operated to command a turning direction; and a control unit that controls respective illuminations of the visible light emission unit and the non-visible light emission unit of the pair of direction indicators in a pre-specified illumination mode according to the turning direction commanded by the operation unit and a number of operations of the operation unit.

According to the third aspect of the present invention, the visible light emission units and non-visible light emission units of the pair of direction indicators are provided at the left and right of the vehicle. Thus, both visible light and non-visible light may be emitted.

An operation for commanding a turning direction is performed at the operation unit. That is, illuminations of the pair of direction indicators are commanded by operations of the operation unit.

The control unit performs control such that respective illuminations of the visible light emission units and non-visible light emission units of the pair of direction indicators are in a pre-specified illumination mode according to the turning direction commanded by the operation unit and the number of operations of the operation unit. Hence, the non-visible light and visible light may be detected by an imaging unit such as a camera or the like, and a notification according to the illumination mode may be given. Thus, turning direction notifying performance to other vehicles may be improved compared to the related art.

The control unit may control the direction indicators, when the operation unit is operated once, so as to respectively cause the visible light emission unit corresponding to the turning direction commanded by the operation unit and the non-visible light emission unit at the opposite side from the turning direction illuminate (a fourth aspect). Thus, non-visible light is emitted toward a vehicle that is approaching from the opposite side from the turning direction. Hence, the non-visible light may be detected by an imaging unit such as a camera or the like and the turning intention may be notified.

The control unit may control the direction indicators, when the operation unit is successively operated plural times, so as to respectively cause the visible light emission unit corresponding to the turning direction commanded by the operation unit and the non-visible light emission unit corresponding to the turning direction illuminate (a fifth aspect). Thus, light may be emitted with illumination modes of the non-visible light emission units and the visible light emission units that are different modes. Therefore, for example, a lane change to switch across multiple traffic lanes or the like may be notified.

An imaging unit that images surroundings of the vehicle may be further provided, wherein the control unit includes a detection unit that detects respective illuminations of the visible light emission units and the non-visible light emission units on the basis of imaging results of the imaging unit (a sixth aspect). In this case, a notifying unit that notifies the turning direction represented by an illumination mode of the direction indicators detected by the detection unit may be further provided (a seventh aspect).

The control unit may control the direction indicators so as to emit lights that, when the visible light emission units and the non-visible light emission units are respectively imaged by the imaging unit, can be distinguished in the imaging results (an eighth aspect).

### ADVANTAGEOUS EFFECTS OF INVENTION

According to the present invention as described above, there is an effect in that turning direction notifying performance to other vehicles may be improved compared to the related art.

### BRIEF DESCRIPTION OF DRAWINGS

Fig. 1 is a block diagram showing a configuration of a direction indication device for a vehicle according to a present exemplary embodiment.
Fig. 2 is a diagram for describing a first operation example of the direction indication device for a vehicle according to the present exemplary embodiment.
Fig. 3 is a diagram for describing a second operation example of the direction indication device for a vehicle according to the present exemplary embodiment.
Fig. 4 is a flowchart showing an example of a flow of processing of direction indication control that is executed by an ECU of the direction indication device for a vehicle according to the present exemplary embodiment.
Fig. 5 is a flowchart showing an example of a flow of processing of direction indication detection control that is executed by the ECU of the direction indication device for a vehicle according to the present exemplary embodiment.

### DESCRIPTION OF EMBODIMENTS

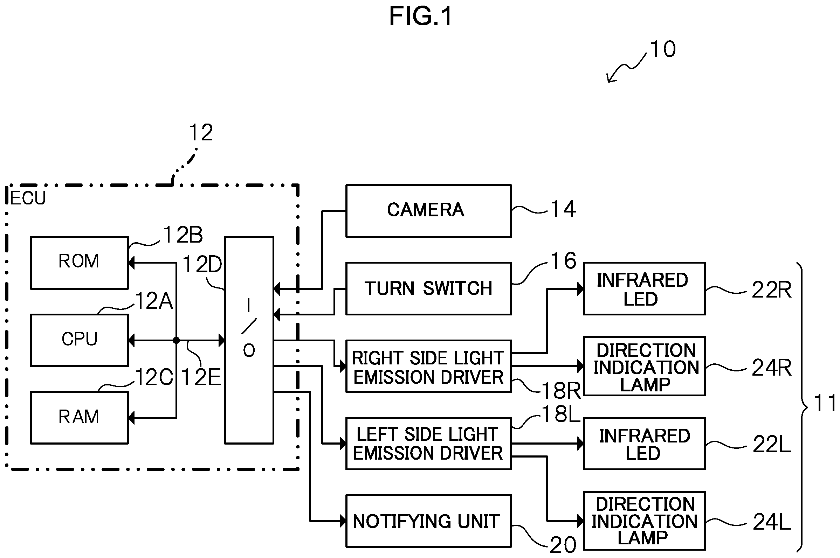

Herebelow, an example of an exemplary embodiment of the present invention is described in detail with reference to the attached drawings. Fig. 1 is a block diagram showing a configuration of a direction indication device for a vehicle according to the present exemplary embodiment.

A direction indication device for a vehicle 10 according to the present embodiment is equipped with an ECU 12 that controls illuminations of a pair of direction indicators 11 that are disposed at each of left and right of the vehicle. The direction indicators 11 are equipped with direction indication lamps 24R and 24L that emit visible light and infrared LEDs 22R and 22L that emit non-visible light.

The ECU 12 is structured by a microcomputer in which a CPU 12A, a ROM 12B, a RAM 12C and an input/output interface (I/O) 12D are each connected to a bus 12E.

A direction indication control program and a direction indication detection program, which are described below, and various kinds of data such as tables, mathematical expressions, threshold values and the like are stored in the ROM 12B. Control of respective emissions of visible light and non-visible light is implemented by the programs stored in the ROM 12B being loaded into the RAM 12C and executed by the CPU 12A. As an example, the programs stored in the ROM 12B are the direction indication control program and the direction indication detection program, but other programs may be stored.

A camera 14 that serves as an imaging unit, a turn switch 16 that serves as an operation unit, a right side light emission driver 18R, a left side light emission driver 18L and a notifying unit 20 are connected to the I/O 12D.

The camera 14 images the surroundings of the vehicle (for example, in front of the vehicle) and outputs imaging results to the ECU 12.

The infrared LED 22R, which serves as a non-visible light emission unit, and the direction indication lamp 24R, which serves as a visible light emission unit, are connected to the right side light emission driver 18R. Similarly, the infrared LED 22L, which serves as a non-visible light emission unit, and the direction indication lamp 24L, which serves as a visible light emission unit, are connected to the left side light emission driver 18L. The right side light emission driver 18R and the left side light emission driver 18L control respective illuminations of the infrared LEDs 22R and 22L and the direction indication lamps 24R and 24L in response to commands from the ECU 12.

In Fig. 1, only one each of the infrared LEDs 22R and 22L and the direction indication lamps 24R and 24L are shown at the left and right. However, the infrared LEDs 22R and 22L and the direction indication lamps 24R and 24L may be respectively provided at the front and rear of the vehicle. The direction indication lamps 24R and 24L emit light of a color conforming to the regulations of a respective country; for example, in Japan the direction indication lamps 24R and 24L emit orange light. Herebelow, where left and right are not to be particularly distinguished, the letters "R" and "L" corresponding to right and left are omitted and these elements are referred to as the light emission drivers 18, infrared LEDs 22 and direction indication lamps 24.

In the present embodiment, the light emission drivers 18 control illuminations of the direction indication lamps 24 and illuminations of the infrared LEDs 22 such that, when the illuminations are imaged by the camera 14, the respective illuminations can be distinguished in the captured images. For example, the respective illuminations may be distinguished by the light emission colours. The respective illuminations of the direction indication lamps 24 and the infrared LEDs 22 may also be made distinguishable by the light emission driver 18 controlling at least one of a pulse width and interval of a driving current. Further, signals representing a turning direction, a traffic lane switch and the like may be transmitted as optical signals by the application of pulse modulation or the like.

The turn switch 16 is a switch that functions as the operation unit, which is operated to command a turning direction of the vehicle. The turn switch 16 inputs illumination commands for the left and right direction indication lamps 24 to the ECU 12. Accordingly, on the basis of signals from the turn switch 16, the ECU 12 controls illuminations of the direction indication lamps 24 and the infrared LEDs 22. In the present embodiment, the ECU 12 controls each of the direction indication lamps 24 and infrared LEDs 22 such that light is emitted in a pre-specified illumination mode according to a turning direction commanded by the turn switch 16 and a number of operations of the turn switch 16.

The notifying unit 20 notifies when a turning vehicle is present, when a lane-changing vehicle is present and so forth. The method of notifying may be notifying by voice messages, and may be notifying by alternative methods such as sounds, lights and the like. In the present embodiment, the ECU 12 detects illuminations of the direction indication lamps 24 and infrared LEDs 22 of another vehicle from imaging results of the camera 14, and the notifying unit 20 gives a notification on the basis of the detection results.

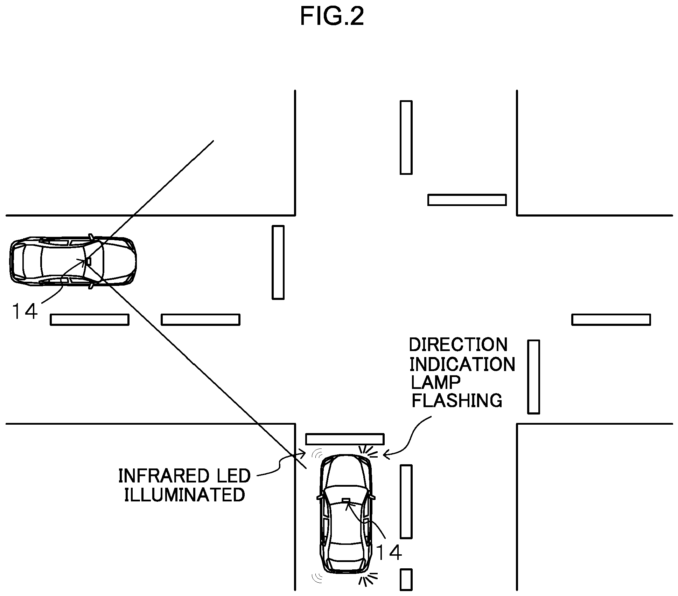

Now, operation examples of the direction indication device for a vehicle 10 according to the present exemplary embodiment are described. Fig. 2 is a diagram for describing a first operation example of the direction indication device for a vehicle 10 according to the present exemplary embodiment.

In a case of turning at an intersection, the direction indication lamp 24 may not be visible to a vehicle approaching from the opposite side from the turning direction, and it may not be apparent to the approaching vehicle whether the present vehicle is going straight ahead or turning.

Accordingly, in the direction indication device for a vehicle 10 according to the present embodiment, the ECU 12 controls the light emission drivers 18 so as to illuminate each of the direction indication lamp 24 corresponding to the turning direction and the infrared LED 22 at the opposite side from the turning direction. In more specific terms, the ECU 12 controls the light emission drivers 18 such that the direction indication lamp 24 toward the turning direction flashes and such that the infrared LED 22 at the opposite side from the turning direction illuminates. Hence, a vehicle approaching from the opposite side from the turning direction may, by detecting the illumination of the infrared LED 22 with the camera 14 thereof or the like, judge the turning intention.

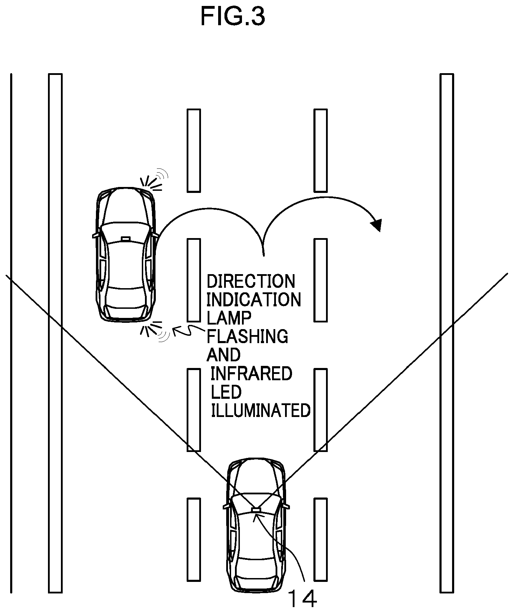

Fig. 3 is a diagram for describing a second operation example of the direction indication device for a vehicle 10 according to the present exemplary embodiment.

In a situation in which there are plural traffic lanes, when the vehicle is performing a lane switch, the switch may be across multiple lanes. It may not be notified to a vehicle behind whether the present vehicle is moving to an adjacent lane or moving to a further lane.

Accordingly, in the direction indication device for a vehicle 10 according to the present embodiment, when the vehicle is to switch multiple lanes, the ECU 12 controls the light emission drivers 18 so as to illuminate both the direction indication lamp 24 and the infrared LED 22 toward the corresponding direction. In more specific terms, the ECU 12 controls the light emission drivers 18 such that the direction indication lamp 24 toward the turning direction flashes and such that the infrared LED 22 toward the turning direction illuminates. That is, light is emitted in a mode that is different from the illumination mode of the direction indication lamps 24 and infrared LEDs 22 described above. Hence, a vehicle behind may, by detecting the illumination of the infrared LED 22 with the camera 14 thereof or the like, judge that the present vehicle is switching multiple lanes when the direction indication lamp 24 and infrared LED 22 toward the same direction are illuminated at the same time. The vehicle behind may judge that the present vehicle is switching to the adjacent lane if the one direction indication lamp 24 is illuminated but the infrared LED 22 toward the same direction is extinguished.

In the present embodiment, control of whether the infrared LED 22 at the opposite side from the direction indication lamp 24 is illuminated as shown in Fig. 2 or the infrared LED 22 toward the same direction as the direction indication lamp 24 is illuminated as shown in Fig. 3 is based on a number of operations of the turn switch 16. In specific terms, when the turn switch 16 is operated once in the present embodiment, the infrared LED 22 at the opposite side from the direction indication lamp 24 is illuminated, as in Fig. 2, and when the turn switch 16 is successively operated twice, the infrared LED 22 toward the same direction as the direction indication lamp 24 is illuminated, as in Fig. 3. Illumination of the infrared LED 22 may be controlled so as to represent a two-lane switch when the turn switch 16 is successively operated twice, and may be controlled so as to represent a three-lane switch when the turn switch 16 is successively operated three times. Here, the number of lanes to be switched that is expressed by the illumination mode of the infrared LED 22 may be optically communicated, by the light emitted from the infrared LED 22 being modulated and information representing the number of lanes being detected by the camera 14 as optical signals. Alternatively, the number of lanes may be expressed by changing one or both of a pulse width and interval of driving power (for example, a driving current) of the infrared LED 22.

Now, specific processing that is executed by the ECU 12 of the direction indication device for a vehicle 10 that is configured as described above is described.

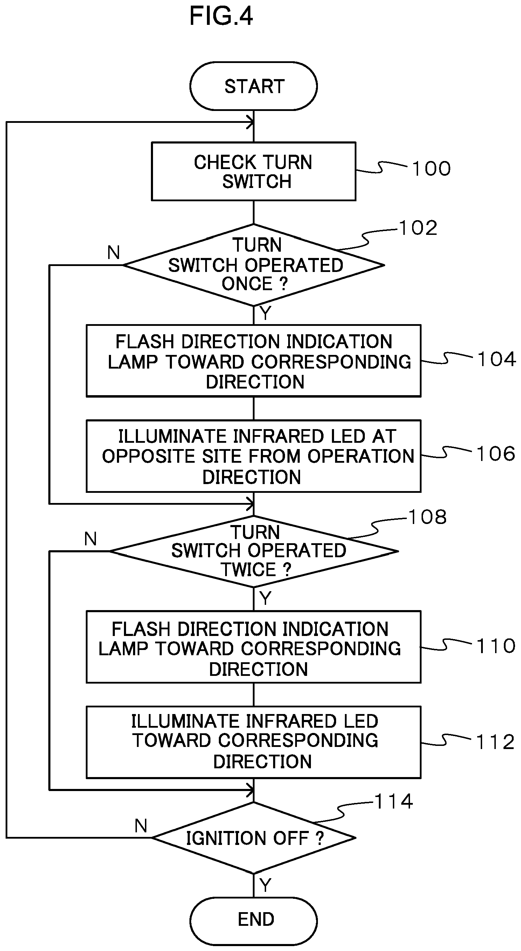

First, direction indication control of the direction indication lamps 24 and infrared LEDs 22 that is implemented by the CPU 12A of the ECU 12 executing the aforementioned direction indication control program is described. Fig. 4 is a flowchart showing an example of a flow of processing of the direction indication control that is executed by the ECU of the direction indication device for a vehicle 10 according to the present exemplary embodiment. The processing in Fig. 4 is started when an ignition switch, which is not shown in the drawings, is switched on.

In step 100, the ECU 12 checks for signals from the turn switch 16, and then proceeds to step 102.

In step 102, the ECU 12 makes a determination as to whether the turn switch 16 has been operated once. If the result of this determination is affirmative, the ECU 12 proceeds to step 104, and if the result is negative, the ECU 12 proceeds to step 108.

In step 104, the ECU 12 performs control such that the direction indication lamp 24 toward the direction corresponding to the direction to which the turn switch 16 is operated flashes, and the ECU 12 proceeds to step 106. To be specific, the ECU 12 commands the light emission driver 18 corresponding to the direction to which the turn switch 16 is operated (the right side light emission driver 18R or the left side light emission driver 18L) to flash the direction indication lamp 24. As a result, the light emission driver 18 implements flashing of the direction indication lamp 24 by applying a driving current to the direction indication lamp 24.

In step 106, the ECU 12 performs control such that the infrared LED 22 at the opposite side from the direction to which the turn switch 16 is operated illuminates, and the ECU 12 proceeds to step 108. To be specific, the ECU 12 commands the light emission driver 18 for the opposite side from the direction to which the turn switch 16 is operated (the right side light emission driver 18R or the left side light emission driver 18L) to illuminate the infrared LED 22. As a result, the 18 implements illumination of the infrared LED 22 by controlling one or both of a pulse width and interval of a driving current and applying the driving current to the infrared LED 22. That is, if the turn switch 16 is operated once, the direction indication lamp 24 toward the turning direction flashes and the infrared LED 22 at the opposite side from the turning direction illuminates. Therefore, when the vehicle is stopped at an intersection as shown in Fig. 2 and is going to turn (a right turn in Fig. 2), the turning intention may be notified by the illumination of the infrared LED 22 to another vehicle in which the camera 14 is installed that is approaching from the opposite side from the turning direction.

In step 108, the ECU 12 makes a determination as to whether the turn switch 16 has been operated twice. For this determination, the ECU 12 makes a determination as to whether the turn switch 16 has been successively operated twice within a pre-specified duration. If the result of the determination is affirmative, the ECU 12 proceeds to step 110, and if the result of the determination is negative, the ECU 12 proceeds to step 114.

In step 110, the ECU 12 performs control such that the direction indication lamp 24 toward the direction corresponding to the direction to which the turn switch 16 is operated flashes, and the ECU 12 proceeds to step 112. To be specific, the ECU 12 commands the light emission driver 18 corresponding to the direction to which the turn switch 16 is operated (the right side light emission driver 18R or the left side light emission driver 18L) to flash the direction indication lamp 24. As a result, the light emission driver 18 implements flashing of the direction indication lamp 24 by applying a driving current to the direction indication lamp 24.

In step 112, the ECU 12 performs control such that the infrared LED 22 toward the direction corresponding to the direction to which the turn switch 16 is operated illuminates, and the ECU 12 proceeds to step 114. To be specific, the ECU 12 commands the light emission driver 18 corresponding to the direction to which the turn switch 16 is operated (the right side light emission driver 18R or the left side light emission driver 18L) to illuminate the infrared LED 22. As a result, the 18 implements illumination of the infrared LED 22 by controlling one or both of a pulse width and interval of a driving current and applying the driving current to the infrared LED 22. That is, if the turn switch 16 is successively operated twice, the direction indication lamp 24 toward the turning direction flashes and the infrared LED 22 toward the turning direction illuminates. Thus, as illustrated in Fig. 3, an intention to switch multiple lanes may be notified to a vehicle behind in which the camera 14 is installed by the flashing of the direction indication lamp 24 and the illumination of the infrared LED 22. Whether the intention is to switch two lanes or to switch three lanes may also be notified in accordance with the number of operations of the turn switch 16. In this case, the number of lanes to be switched may be notified by controlling the illumination mode of the direction indication lamp 24 and infrared LED 22 in different modes. Alternatively, light emitted from the infrared LED 22 may be controlled by light modulation so as to transmit information representing the number of lanes to be switched. As a further alternative, when a light source capable of optical communications such as LEDs or the like is used as the direction indication lamps 24, information may be transmitted to surrounding vehicles in which the camera 14 is installed by flashing of the direction indication lamps 24 being controlled to implement optical communications.

In step 114, the ECU 12 makes a determination as to whether the ignition switch has been switched off. If the result of this determination is negative, the ECU 12 returns to step 100 and repeats the processing described above. If the result is affirmative, the ECU 12 ends this sequence of processing.

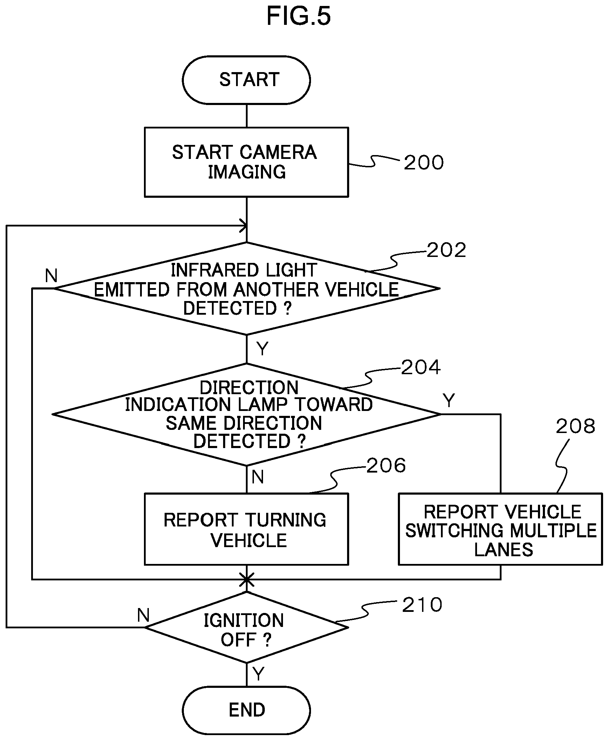

Now, detection control of the infrared LEDs 22 and the direction indication lamps 24 that is implemented by the CPU 12A of the ECU 12 executing the direction indication detection program is described. Fig. 5 is a flowchart showing an example of a flow of processing of direction indication detection control that is executed by the ECU of the direction indication device for a vehicle 10 according to the present exemplary embodiment. The processing in Fig. 5 is started when the ignition switch, which is not shown in the drawings, is switched on.

In step 200, the ECU 12 controls the camera 14 and starts imaging by the camera 14, and the ECU 12 proceeds to step 202.

In step 202, the ECU 12 makes a determination as to whether one of the infrared LEDs 22 emitting light from another vehicle has been detected. This determination is a determination as to whether illumination of the infrared LED 22 is detected from captured images that are imaged by the camera 14. As mentioned above, in the present embodiment the direction indication lamps 24 and the infrared LEDs 22 emit lights that can be distinguished. Therefore, illumination of the infrared LED 22 can be detected from captured images. If the result of this determination is affirmative, the ECU 12 proceeds to step 204, and if the result is negative, the ECU 12 proceeds to step 210.

In step 204, the ECU 12 makes a determination as to whether the direction indication lamp 24 toward the same direction as the infrared LED 22 is detected at the same time. For this determination, the ECU 12 makes a determination as to whether the direction indication lamp 24 and the infrared LED 22 toward the same direction (the left side or the right side) are illuminated at the same time. If the result of this determination is negative, the ECU 12 proceeds to step 206, and if the result is affirmative, the ECU 12 proceeds to step 208.

In step 206, the ECU 12 controls the notifying unit 20 and notifies the presence of a turning vehicle, and the ECU 12 proceeds to step 210. That is, a notification is given by the notifying unit 20 that a vehicle stopped at an intersection intends to turn rather than going straight ahead, as illustrated in Fig. 2.

Alternatively, in step 208, the ECU 12 controls the notifying unit 20 and notifies that a vehicle switching multiple lanes is present, and the ECU 12 proceeds to step 210. That is, a notification is given by the notifying unit 20 that a vehicle in front as illustrated in Fig. 3 is, for example, a vehicle in front that intends to switch two lanes. If the turn switch 16 has been operated once, the direction indication lamp 24 toward the lane switch direction of the vehicle in front flashes and the infrared LED 22 at the opposite side from the lane switch direction is illuminated, and these are detected by the camera 14. Therefore, it may be understood that a vehicle in front that is running in the same direction intends to switch one lane, and the presence of a vehicle intending to switch one lane may be notified. If the number of lanes to be switched can be distinguished from illumination modes, optical communications or the like that are detected using imaging results of the camera 14, the number of lanes that a vehicle changing lanes is to switch may also be notified.

In step 210, the ECU 12 makes a determination as to whether the ignition switch has been switched off. If the result of this determination is negative, the ECU 12 returns to step 202 and repeats the processing described above. If the result is affirmative, the ECU 12 ends this sequence of processing.

Thus, in the present embodiment, when a vehicle is turning at an intersection as illustrated in Fig. 2, the direction indication lamp 24 toward the turning direction flashes and the infrared LED 22 at the opposite side from the turning direction illuminates. Consequently, the turning intention may be notified to a vehicle in which the camera 14 is installed that is approaching from the opposite side from the turning direction. Thus, turning direction notifying performance to other vehicles may be improved compared to the related art.

Further, when a vehicle is switching multiple lanes as illustrated in Fig. 3, the direction indication lamp 24 and the infrared LED 22 towards the turning direction light up. Consequently, it may be notified to a vehicle behind in which the camera 14 is installed that the present vehicle intends to switch multiple lanes. Thus, turning direction notifying performance to other vehicles may be improved compared to the related art.

In the embodiment described above, when light emitted from the direction indication lamp 24 and light emitted from the infrared LED 22 are to be respectively imaged by the camera 14, the respective illuminations are controlled such that they can be distinguished, but this is not limiting. For example, rather than the respective illuminations being controlled such that they can be distinguished, an infrared camera and a visible light camera may be provided and the respective illuminations may be distinguished at the detection side.

In the embodiment described above, it is described that the infrared LEDs 22 are controlled to illuminate in step 106 and step 112. When one of the infrared LEDs 22 is to illuminate, the infrared LED 22 may illuminate so as to flash at a predetermined interval similarly to the direction indication lamp 24.

In the embodiment described above, examples of control when the turn switch 16 is operated once and control when the turn switch 16 is operated twice are described. However, only one or other of these controls may be implemented. In other words, steps 102 to 106 or steps 108 to 112 in Fig. 4 may be omitted.

The processing in Fig. 4 and Fig. 5 of the embodiment described above is described as being processing that is implemented in software, but may be processing that is implemented in hardware, and may be processing that is implemented in a combination of software and hardware.

The present invention is not limited by the above recitations. In addition to the above recitations, it will be clear that numerous modifications may be embodied within a technical scope not departing from the gist of the invention.

The disclosures of Japanese Patent Application No. 2015-012413 filed January 26, 2015 are incorporated into the present specification by reference in their entirety.

## Claims

1. A direction indication device for a vehicle, comprising:
a pair of direction indicators disposed at left and right of the vehicle, each direction indicator including a visible light emission unit that emits visible light and a non-visible light emission unit that emits non-visible light;
an operation unit that is operable to command a turning direction; and
a control unit that controls the direction indicators so as to respectively cause the visible light emission unit corresponding to the turning direction commanded by the operation unit, and the non-visible light emission unit at the opposite side from the turning direction, to illuminate.

2. The direction indication device for a vehicle according to claim 1, wherein the control unit further controls the direction indicators, when the operation unit is successively operated a plurality of times, so as to respectively cause the visible light emission unit corresponding to the turning direction commanded by the operation unit, and the non-visible light emission unit corresponding to the turning direction, to illuminate.

3. A direction indication device for a vehicle, comprising:
a pair of direction indicators disposed at left and right of the vehicle, each direction indicator including a visible light emission unit that emits visible light and a non-visible light emission unit that emits non-visible light;
an operation unit that is operable to command a turning direction; and
a control unit that controls respective illuminations of the visible light emission units and the non-visible light emission units of the pair of direction indicators in a pre-specified illumination mode, according to the turning direction commanded by the operation unit and a number of operations of the operation unit.

4. The direction indication device for a vehicle according to claim 3, wherein the control unit controls the direction indicators, when the operation unit is operated once, so as to respectively cause the visible light emission unit corresponding to the turning direction commanded by the operation unit, and the non-visible light emission unit at the opposite side from the turning direction, to illuminate.

5. The direction indication device for a vehicle according to claim 3 or claim 4, wherein the control unit controls the direction indicators, when the operation unit is successively operated a plurality of times, so as to respectively cause the visible light emission unit corresponding to the turning direction commanded by the operation unit, and the non-visible light emission unit corresponding to the turning direction, to illuminate.

6. The direction indication device for a vehicle according to any one of claims 1 to 5, further comprising an imaging unit that images surroundings of the vehicle,
wherein the control unit includes a detection unit that detects respective illuminations of the visible light emission units and the non-visible light emission units on the basis of imaging results of the imaging unit.

7. The direction indication device for a vehicle according to claim 6, further comprising a notifying unit that notifies the turning direction represented by an illumination mode of the direction indicators detected by the detection unit.

8. The direction indication device for a vehicle according to claim 6 or claim 7, wherein the control unit controls the direction indicators so as to emit lights that, when the visible light emission units and the non-visible light emission units are respectively imaged by the imaging unit, can be distinguished in the imaging results.
